# EUROPÄISCHE PATENTANMELDUNG

(11) **EP 1 521 015 A2**
(43) Veröffentlichungstag der Anmeldung: **06.04.2005**
(21) Anmeldenummer: 04023303.3
(22) Anmeldetag: 30.09.2004
(51) Int. Cl.: F16G 13/16

(54) **Energieführungskette**

(30) Priorität: 02.10.2003 DE 10346486
(71) Anmelder: Murrplastik Systemtechnik GmbH, 71570 Oppenweiler (DE)
(72) Erfinder: Scharf-Martini, Lutz, 73614 Schorndorf (DE); Krauss, Eckard, 71554 Weissach im Tal (DE); Funk, Rainer, 71543 Wüstenrot (DE); Jostmeier, Helmut, 74420 Oberrot b. Gaildorf (DE)
(74) Vertreter: Reule, Hanspeter

(57) **Zusammenfassung**

Die Erfindung betrifft eine Energieführungskette mit einer Vorrichtung zur Erkennung ihres Verschleißes. Die Vorrichtung weist ein durch den Gebrauch der Kette abnutzbares Verschleißelement (13, 20, 32, 32', 40, 106) an mindestens einem Kettenglied (1) auf.

## Beschreibung

Die Erfindung betrifft eine Energieführungskette mit einer Vorrichtung zur Erkennung ihres Verschleißes bzw. mit einer Vorrichtung zur Erkennung eines Kettenbruchs.

Bei Energieführungsketten besteht das Problem, dass Laufstörungen auftreten können oder dass sie brechen können, wenn sie über längere Zeit in Betrieb waren und entsprechend abgenutzt sind. Dabei treten in erster Linie zwei typische Ausfallerscheinungen auf. Zum einen werden die Gleitflächen der aufeinander gleitenden Kettenteile abgenutzt, so dass die die Seitenglieder der Kette verbindenden Querstege ineinander einhaken. Zum anderen besteht die Gefahr des Kettenbruchs, insbesondere bei freitragenden Ketten. Beide Beschädigungen sind zwar an sich nicht besonders schwerwiegend, da beschädigte oder abgenutzte Kettenglieder leicht austauschbar sind. In beiden Fällen besteht jedoch die Gefahr, dass ein Schaden nicht erkannt wird und die beschädigte Kette in Gebrauch bleibt. Dabei kann die beschädigte Kette aus der Führung fallen, oder es können in ihr geführte Leitungen beschädigt werden, was Folgeschäden nach sich zieht, die erheblich höher sind als der eigentliche Schaden an der Kette.

Aus der DE 203 05 678 U1 ist ein Überwachungssystem für den Betrieb wenigstens einer Energieführungskette bekannt, bei dem mittels Kraftmesseinrichtungen die auf einzelne Kettenglieder wirkenden Kräfte gemessen werden. Bei einer Beschädigung der Kette wirken unterschiedliche Kräfte auf die einzelnen Kettenglieder. Solche Unterschiede werden von einer aufwendigen Auswerteelektronik erfaßt, die das defekte Kettenglied identifiziert.

Es ist Aufgabe der Erfindung, eine Energieführungskette der eingangs genannten Art derart weiterzubilden, dass aus der Abnutzung der Kette resultierende Folgeschäden auf einfachere Weise vermieden werden können.

Die Aufgabe wird erfindungsgemäß durch eine Energieführungskette gemäß Anspruch 1 gelöst.

Der Erfindung liegt der Gedanke zugrunde, dass durch die Abnutzung des Verschleißelements, das nicht zur Stabilität der Kette beiträgt, ein kritischer Abnutzungsgrad der Kette angezeigt wird, bevor die Kette bricht und weitere Schäden entstehen. Die definierte Abnutzung des Verschleißelements erfolgt durch den bestimmungsgemäßen Gebrauch der Energieführungskette. Dabei kann das Verschleißelement eine einfache optische Markierung in einer Signalfarbe sein, die durch den Gebrauch der Kette durch Abrieb nach und nach verschwindet. Sobald die Markierung nicht mehr deutlich sichtbar ist, muß das die Kette beaufschlagende Antriebssystem abgeschaltet und das abgenutzte Kettenglied bzw. die abgenutzten Kettenglieder ersetzt werden.

Alternativ hierzu kann das Verschleißelement eine mit der Kette geführte elektrische Leitung sein. Diese kann in mindestens einem Kettenglied aus dessen Innerem bis nahe an seine Außenfläche geführt sein. Die Außenfläche ist durch Gebrauch der Kette einem Abrieb ausgesetzt und gibt, wenn ein vorbestimmter Abnutzungsgrad erreicht ist, die elektrische Leitung frei. Durch weiteren Gebrauch der Kette wird die Leitung an ihrer freigelegten Partie abgenutzt, bis sie bricht. Ergänzend oder alternativ hierzu kann die Leitung an mindestens einem Kettenglied aus dessen Außenfläche hervortreten. Die Leitung ist dann beim Gebrauch der Kette von vornherein dem Verschleiß ausgesetzt. Sie ist so angeordnet und konzipiert, dass sie dann bricht, wenn ein für die Kette kritischer Abnutzungsgrad erreicht ist.

Eine alternative Ausgestaltung sieht vor, dass die Energieführungskette aus Kunststoff extrudiert ist und dass die elektrische Leitung in die Kette eingebettet ist. Die Leitung wird dann nicht durch Abrieb an einer Außenfläche eines Kettenglieds abgenutzt, sondern durch die ständige Wechselverformung beim Verfahren der Kette.

Bei allen genannten Alternativen ist an die elektrische Leitung zweckmäßig eine Signaleinrichtung angeschlossen, die bei Unterbrechung der Leitung ein optisches und/oder akustisches Signal aussendet. Dieses Signal zeigt an, dass ein kritischer Abnutzungsgrad der Kette erreicht ist und dass die Kette repariert werden muß. Besonders vorteilhaft ist es, wenn eine die Kette beaufschlagende Antriebseinrichtung an die elektrische Leitung angeschlossen ist und bei Unterbrechung der Leitung abgeschaltet wird. Bei einem Bruch der Leitung erfolgt die Abschaltung des Kettenantriebs dann automatisch, und auf dem Maschinendisplay der Antriebseinrichtung wird eine Fehlermeldung angezeigt.

Eine alternative Ausgestaltung der Erfindung sieht vor, dass die Vorrichtung ein Messelement aufweist, das vom Verschleißelement bedeckt wird und von diesem bei einer vorbestimmten Abnutzung freigegeben wird. Das Messelement kann eine optische Markierung sein, deren Sichtbarwerden anzeigt, dass das Kettenglied ausgetauscht werden muß. Vorzugsweise ist das Messelement jedoch ein entgegen einer elastischen Rückstellkraft schaltbarer elektrischer Kontakt, durch dessen Schalten ein Stromkreis unterbrochen oder geschlossen wird, wobei die Rückstellkraft das Verschleißelement beaufschlagt. Zweckmäßig weist das Verschleißelement eine Sollbruchstelle auf, die durch Gebrauch der Kette so abnutzbar ist, dass sie bei einer vorbestimmten Abnutzung unter der Einwirkung der Rückstellkraft bricht. Dies ermöglicht eine automatische Erkennung der Abnutzung.

Wenn eine die Kette beaufschlagende Antriebseinrichtung an den Stromkreis angeschlossen ist, wird diese vorzugsweise automatisch abgeschaltet, und auf ihrem Maschinendisplay wird eine Fehlermeldung angezeigt, so bald der Kontakt umgeschaltet, also geöffnet oder geschlossen wird. Alternativ oder ergänzend hierzu kann eine Signaleinrichtung an den Stromkreis angeschlossen sein. Diese kann bei Unterbrechung oder Schließung des Stromkreises ein akustisches und/oder optisches Signal aussenden. Der Stromkreis kann als elektrischen Leiter ein mit der Kette geführtes, vorzugsweise zweiadriges Kabel aufweisen. Es ist jedoch auch möglich, dass die Kette aus metallischen Gliedern gebildet ist und den elektrischen Leiter bildet.

Der elektrische Kontakt ist zweckmäßig ein Federkontakt. Vorzugsweise ist zwischen dem Kontakt und dem Verschleißelement ein Abstandshalter angeordnet. Dies hat den Vorteil, dass der Kontakt nicht direkt an das Verschleißelement angrenzend eingebaut werden muss, so dass mehr Platz für seinen Einbau zur Verfügung steht. Über den Abstandshalter beaufschlagt der Kontakt mit seiner Rückstellkraft das Verschleißelement.

Das Messelement kann auf einer Außenfläche des Kettenglieds angeordnet sein. Dabei kann es als Baueinheit zusammen mit dem Verschleißelement auf dem Kettenglied befestigt sein. Es wird jedoch bevorzugt, dass das Messelement unter der Außenfläche des Kettenglieds angeordnet ist und das Verschleißelement in die Außenfläche integriert ist.

Vorzugsweise ist der Kontakt in eine Aufnahmekontur im Kettenglied eingesetzt, die eine Öffnung in der Außenfläche des Kettenglieds aufweist, wobei das Verschleißelement eine die Öffnung verschließende Abdeckung aufweist. Dabei kann die Abdeckung die Sollbruchstelle aufweisen und bei einer vorbestimmten Abnutzung unter der Einwirkung der Rückstellkraft brechen. Alternativ hierzu kann die Abdeckung durch Befestigungsmittel am Kettenglied gehalten sein, die die Sollbruchstelle aufweisen und bei Bruch der Sollbruchstelle die Abdeckung freigeben.

Vorzugsweise ist die Vorrichtung zur Verschleißerkennung als eine Baugruppe ausgebildet. Sie weist einen Kontakt, eine Feder, ein abnutzbares Verschleißelement und Anschlüsse für den elektrischen Leiter auf. Beim Zusammenbau der Kette wird die vorgefertigte Baugruppe in die Aufnahmekontur eingesetzt oder an der Außenfläche des Kettenglieds befestigt.

Die Vorrichtung zur Verschleißerkennung kann in ein Glied der Kette, in mehrere Glieder oder in alle Glieder der Kette eingebaut sein.

Eine alternative Ausgestaltung der Erfindung sieht vor, dass die Vorrichtung eine Messeinrichtung aufweist, die in oder an einer Führung der Kette angeordnet ist. Die Messeinrichtung ist durch Annäherung des Verschleißelements beaufschlagbar. Zweckmäßig ist die Messeinrichtung ein Näherungsschalter, und das Verschleißelement ist eine Beschichtung des Kettenglieds, durch deren Annäherung der Näherungsschalter geschaltet wird. Abhängig davon, ob die Messeinrichtung ein induktiver, ein kapazitiver oder ein magnetisch-induktiver Näherungsschalter ist, ist die Beschichtung des Kettenglieds aus Metall, Kunststoff oder einem Magnetwerkstoff. Wenn die Beschichtung durch Verschleiß abgenutzt ist, wird der Näherungsschalter beim Vorbeiführen des Kettenglieds nicht mehr geschaltet. Dadurch wird ein Signal ausgelöst und/oder die Antriebseinrichtung der Kette wird abgeschaltet, und auf ihrem Maschinendisplay wird eine Fehlermeldung angezeigt. Die Beschichtung kann an einem Glied der Kette, an mehreren Gliedern oder an allen Gliedern der Kette angebracht sein.

Eine weitere alternative Ausgestaltung der Erfindung sieht eine Messeinrichtung in oder an einer Führung der Kette und einen Magneten an mindestens einem Kettenglied vor, der vom Verschleißelement bedeckt wird und bei einer vorbestimmten Abnutzung des Verschleißelements freigegeben wird. Durch die Annäherung des Magneten ist die Messeinrichtung beaufschlagbar. Dabei kann der Magnet an einer Außenfläche des Kettenglieds angebracht sein. Das Verschleißelement ist dann eine den Magneten bedeckende Beschichtung. Der Magnet kann auch in einer Ausnehmung im Kettenglied angebracht sein und vom Verschleißelement im Abstand zur Außenfläche des Kettenglieds gehalten werden.

Alternativ wird die Aufgabe durch eine Energieführungskette gemäß Anspruch 30 gelöst. Dieser Lösung liegt der Gedanke zugrunde, dass das Bruchelement zugbeaufschlagt wird, wenn sich der Abstand zweier Befestigungspunkte durch einen Bruch der Kette ändert. Das Bruchelement ist so dimensioniert, dass es dann bricht, wenn seine Zugbeaufschlagung einen kritischen Wert überschreitet. Dieser kritische Wert wird dann erreicht, wenn die Kette durch einen Bruch so beschädigt ist, dass Folgeschäden zu entstehen drohen.

Zweckmäßig befinden sich die Befestigungspunkte an das Kettenglied mit benachbarten Kettengliedern verbindenden Drehachsen. Der Abstand zwischen benachbarten Drehachsen bleibt beim ordnungsgemäßen Betrieb der Energieführungskette stets konstant. Eine Änderung dieses Abstands ist ein relativ zuverlässiger Hinweis auf einen Bruch der Kette. Vorzugsweise ist das Bruchelement an Haltezapfen fixiert, die an den Drehachsen befestigt sind. Dies ist eine besonders einfache Art der Befestigung.

Zweckmäßig ist das Bruchelement entlang einer seitlichen Außenwand der Energieführungskette bzw. entlang einer seitlichen Innenwand gespannt. Vorzugsweise ist ein weiteres Bruchelement entlang einer zweiten seitlichen Außenwand bzw. einer zweiten seitlichen Innenwand gespannt. Jedes der beiden Bruchelemente zeigt unabhängig vom anderen Bruchelement einen Bruch in der Wand an, entlang derer es gespannt ist. Vorteilhafterweise ist das Bruchelement eine elektrische Leitung. An diese ist zweckmäßig eine Anzeigeeinheit angeschlossen, die bei Unterbrechung der Leitung ein optisches und/oder akustisches Signal aussendet. Alternativ oder ergänzend hierzu kann eine die Energieführungskette beaufschlagende Antriebseinrichtung an die Leitung angeschlossen sein und bei Unterbrechung abgeschaltet werden. An einem Maschinendisplay der Antriebseinrichtung wird dann eine Fehlermeldung angezeigt.

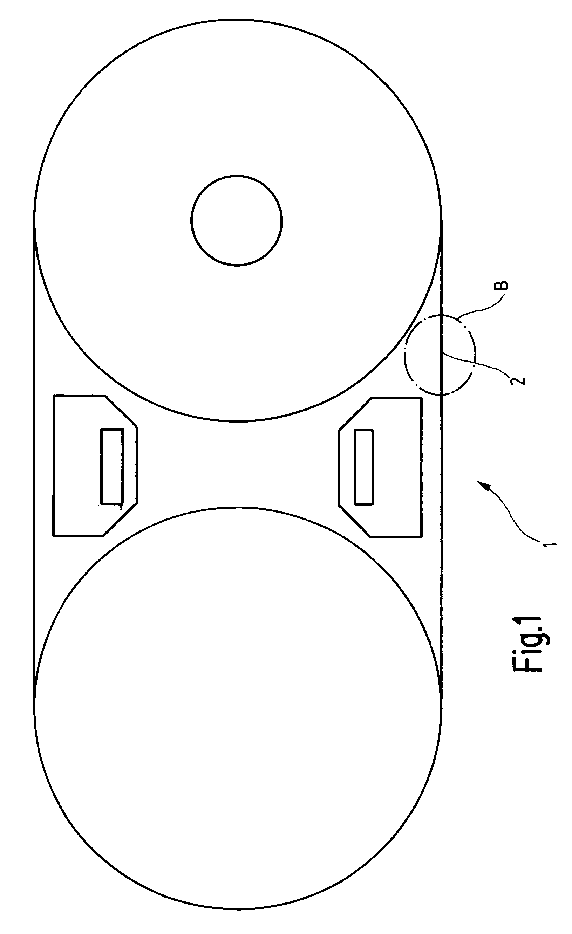

Im Folgenden wird die Erfindung anhand der in der Zeichnung schematisch dargestellten Ausführungsbeispiele näher erläutert. Es zeigen
- Fig. 1: eine schematische Seitenansicht eines Kettenglieds einer Energieführungskette mit einer Vorrichtung zur Verschleißerkennung gemäß einem ersten Ausführungsbeispiel;
- Fig. 2: eine vergrößerte Darstellung des Bereichs B aus Fig. 1 im Schnitt;

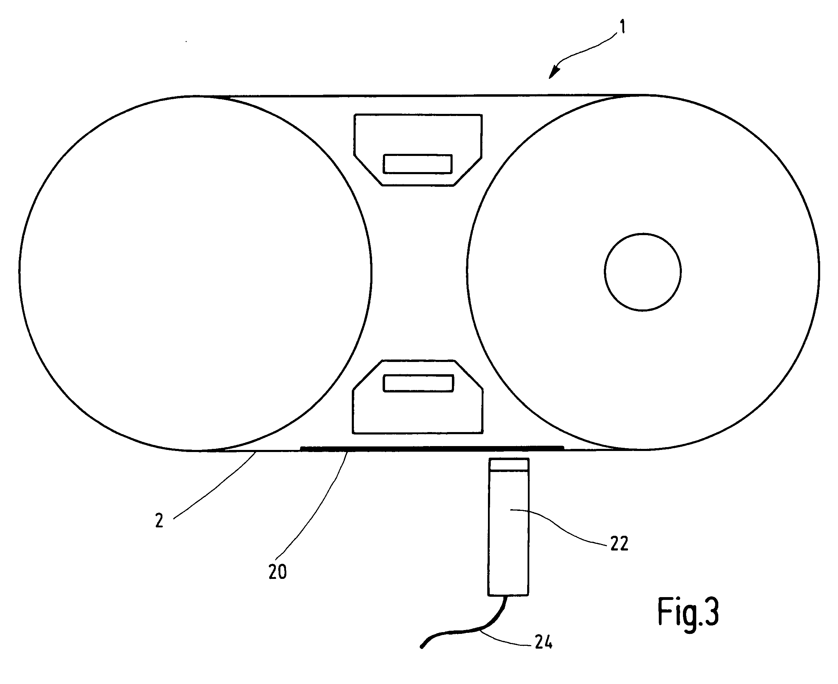

- Fig. 3 bis 6: schematische Seitenansichten eines Kettenglieds einer Energieführungskette mit einer Vorrichtung zur Verschleißerkennung gemäß einem zweiten, dritten, vierten und fünften Ausführungsbeispiel;
- Fig. 7: einen Querschnitt durch ein Kettenglied einer Energieführungskette mit einer Vorrichtung zur Verschleißerkennung gemäß einem sechsten Ausführungsbeispiel;
- Fig. 8: eine Detaildarstellung aus Fig. 7.
- Fig. 9: eine schematische Seitenansicht eines Abschnitts einer Energieführungskette mit einer Vorrichtung zur Brucherkennung gemäß einem siebten Ausführungsbeispiel.
- Fig. 10: einen vergrößerten Schnitt entlang der Linie A-B aus Fig. 9

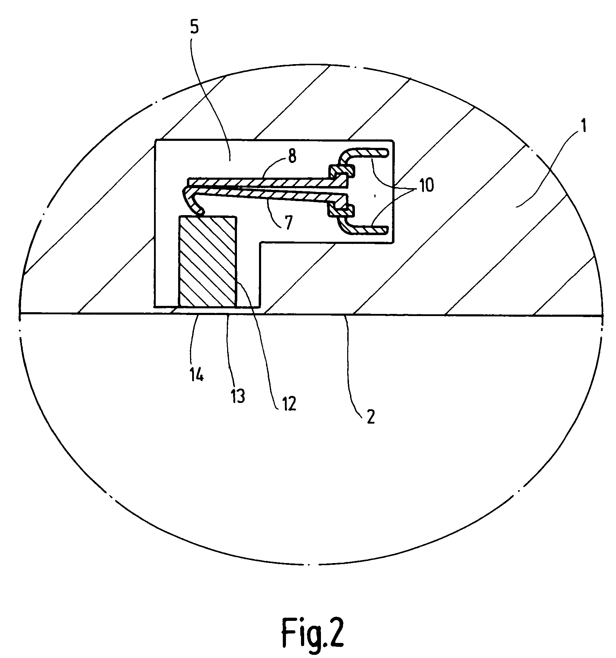

Ein Kettenglied 1 einer Energieführungskette weist gemäß einem ersten Ausführungsbeispiel an seiner Außenfläche 2 an einer aufgrund der bei Bewegung der Energieführungskette auftretenden Reibung und anderer mechanischer Beanspruchungen besonders verschleißanfälligen Stelle eine Vorrichtung zur Erkennung des Verschleißes auf. In einer Aufnahmekontur 5 in der Wand des Kettenglieds 1 ist ein Federkontakt 7,8 angeordnet, an den eine elektrische Leitung 10 angeschlossen ist. An die elektrische Leitung 10 ist am Ende der Kette eine Signaleinrichtung angeschlossen, die ein Signal aussendet, wenn der Federkontakt 7, 8 geöffnet wird. Im Betriebszustand der Energieführungskette ist der Federkontakt 7, 8, wie in Fig. 2 gezeigt, geschlossen. Dazu wird ein erstes Kontaktelement 7 entgegen einer elastischen Rückstellkraft gegen ein zweites Kontaktelement 8 gedrückt. Die Rückstellkraft beaufschlagt über einen Abstandshalter 12 ein Verschleißelement 13, das in die Außenfläche 2 des Kettenglieds 1 integriert ist, und das eine Abdeckung der Aufnahmekontur 5 bildet. Das Verschleißelement 13 weist eine Sollbruchstelle 14 auf. Die Sollbruchstelle 14 ist durch mechanische Beanspruchung des Kettenglieds 1, insbesondere durch Reibung, Zug- und Druckspannung, abnutzbar. Wenn ein vorbestimmter kritischer Grad der Abnutzung des Kettenglieds 1 an der Sollbruchstelle 14 erreicht ist, bricht die Sollbruchstelle 14 unter dem Druck der Rückstellkraft und gibt den Abstandshalter 12 und das erste Kontaktelement 7 frei. Dadurch wird der Federkontakt 7, 8 geöffnet, und der bis dahin geschlossene Stromkreis 7, 8, 10, in den die Signaleinrichtung integriert ist, wird geöffnet. Eine die Kette beaufschlagende Antriebseinrichtung ist ebenfalls in den Stromkreis 7, 8, 10 integriert, so dass beim Öffnen des Kontakts 7, 8 der Antrieb der Kette ausgeschaltet und auf ihrem Maschinendisplay eine Fehlermeldung angezeigt wird.

Der Grad der Abnutzung, bei dem die Sollbruchstelle 14 unter dem Druck der Rückstellkraft bricht, ist so gewählt, dass mit einem Bruch des Kettenglieds 1 nur dann zu rechnen ist, wenn das Kettenglied 1 auch nach dem Bruch der Sollbruchstelle 14 weiter benutzt und weiterem Verschleiß ausgesetzt wird. Die Größe und Masse des Abstandshalters 12 sowie die Stärke der Rückstellkraft sind so bemessen, dass der Abstandshalter 12 beim Bruch der Sollbruchstelle 14 mit so niedriger Energie aus der Aufnahmekontur 5 schnellt, dass er keine Beschädigungen an Geräten in der Umgebung des Kettenglieds 1 verursachen kann.

Gemäß einem zweiten Ausführungsbeispiel ist an der Außenfläche 2 eines Kettenglieds 1 eine Beschichtung 20 als Verschleißelement angebracht. In einer Ablegewanne, die der Führung der Energieführungskette dient, ist als Messeinrichtung ein Näherungsschalter 22 angeordnet. Der Näherungsschalter 22 wird bei Annäherung der Beschichtung 20 geschaltet und gibt so über ein Kabel 24 ein Signal an eine Signaleinrichtung, das anzeigt, dass sich eine Beschichtung angenähert hat. Die Beschichtung 20 ist an einer besonders verschleißanfälligen Stelle der Außenfläche 2 angebracht. Durch Gebrauch der Kette wird die Beschichtung 20 abgenutzt. Sie ist in der Weise aufgebracht, dass sie, wenn das Kettenglied 1 einen kritischen Abnutzungsgrad erreicht hat, verschwunden ist oder so dünn ist, dass durch ihre Annäherung der Näherungsschalter 22 nicht mehr geschaltet wird. Die Beschichtung ist an mehreren aufeinanderfolgenden Kettengliedern angebracht. Der Näherungsschalter 22 ist mit einer Auswerteelektronik gekoppelt, die feststellt, wenn die Beschichtung 20 eines dieser Kettenglieder so weit abgenutzt ist, dass ihre Annäherung an den Näherungsschalter 22 kein Meßsignal mehr auslöst. Wenn dies der Fall ist, wird die Signaleinrichtung betätigt, und die die Kette antreibende Antriebseinrichtung wird abgeschaltet.

Abhängig davon, ob der Näherungsschalter 22 als induktiver, kapazitiver oder magnetisch-induktiver Näherungsschalter ausgebildet ist, ist die Beschichtung 20 als Beschichtung aus Metall, Kunststoff oder Dauermagnetwerkstoff ausgebildet.

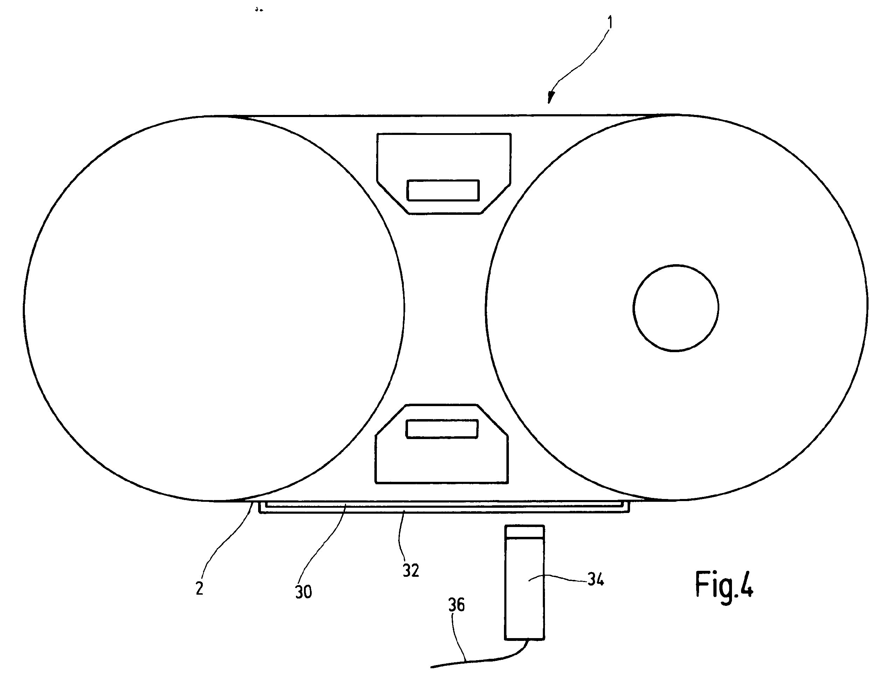

Das in Fig. 4 dargestellte dritte Ausführungsbeispiel stellt eine Umkehrung des Prinzips des zweiten Ausführungsbeispiels dar. An der Außenfläche 2 des Kettenglieds 1 ist ein Magnet 30 angebracht. Dieser ist mit einer Beschichtung 32 als Verschleißelement bedeckt. In der Ablegewanne der Energieführungskette ist ein Messelement 34 angeordnet. Durch Abnutzung des Verschleißelements 32 wird der Magnet 30 freigelegt. Wenn das Kettenglied 1 einen kritischen Abnutzungsgrad erreicht hat, ist der Magnet 30 in dem Maße freigelegt, dass seine Annäherung an das Messelement 34 ein Messsignal auslöst. Über ein Kabel 36 wird das Messsignal an eine Signaleinrichtung weitergegeben, die anzeigt, dass sich der durch Verschleiß freigelegte Magnet 30 angenähert hat. Gleichzeitig wird die Antriebseinrichtung der Kette abgeschaltet.

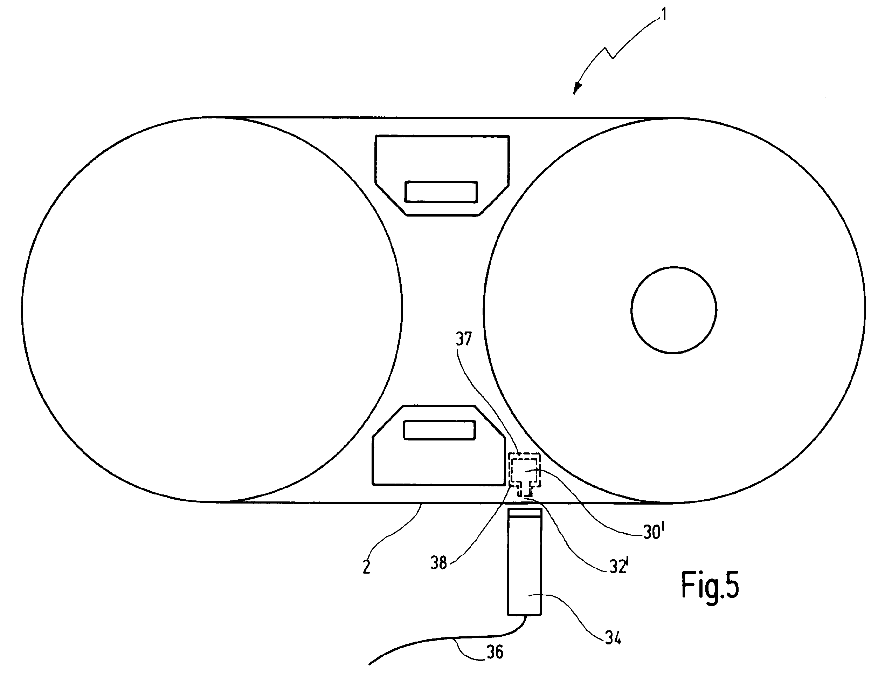

Das vierte Ausführungsbeispiel (Fig. 5) stellt eine Variante dieses Prinzips dar. Dieses Ausführungsbeispiel unterscheidet sich vom dritten Ausführungsbeispiel lediglich darin, dass ein Magnet 30' in einer Ausnehmung 37 im Kettenglied 1 angebracht ist. Das Verschleißelement 32' hindert den Magneten 30' daran, an die Außenfläche 2 des Kettenglieds 1 zu treten. Ist jedoch das Verschleißelement 32' durch Abnutzung verschwunden, fällt der Magnet 30' in der Ausnehmung 37 nach unten, bis er auf einer Schulter 38 aufliegt, und beaufschlagt das Messelement 34 bei der Annäherung.

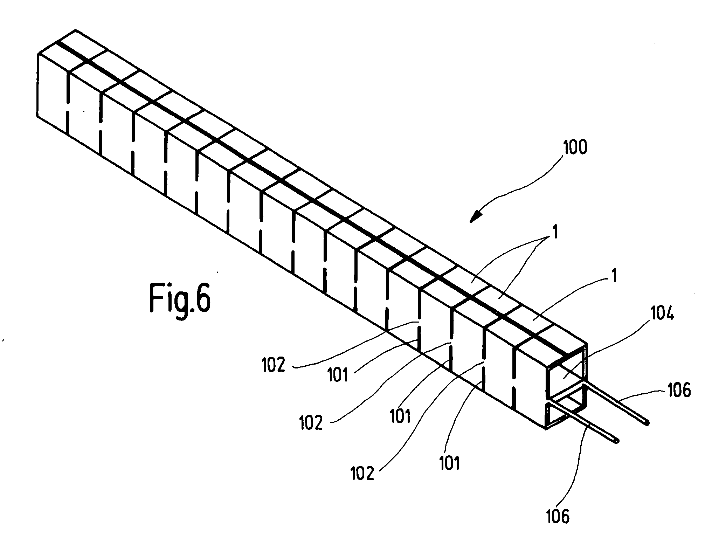

Gemäß einem fünften Ausführungsbeispiel (Fig. 6) ist eine Energieführungskette 100 einstückig aus Kunststoff extrudiert. Die Kettenglieder 1 sind durch Trennschlitze 101 voneinander getrennt und durch Verbindungsstege 102 miteinander verbunden. Sie umschließen einen Kabelkanal 104 zur Führung von Kabeln. In die Kette 100 sind elektrische Leitungen 106 in Form von Drähten eingebettet, die beim Verfahren der Kette 100 ebenso wie diese selbst ständig wechselverformt werden. Die Leitungen 106 sind so konzipiert, dass sie nach einer vorbestimmten Anzahl von Wechselverformungen, die eine für den Verschleiß der Kette 100 kritische Zahl darstellt, brechen. Dadurch wird ein Stromkreis unterbrochen, an den eine Antriebseinrichtung der Kette 100 angeschlossen ist. Wenn eine der Leitungen 106 bricht, wird die Antriebseinrichtung für die Kette 100 automatisch abgeschaltet. Zudem sendet eine angeschlossene Signaleinrichtung ein Signal aus.

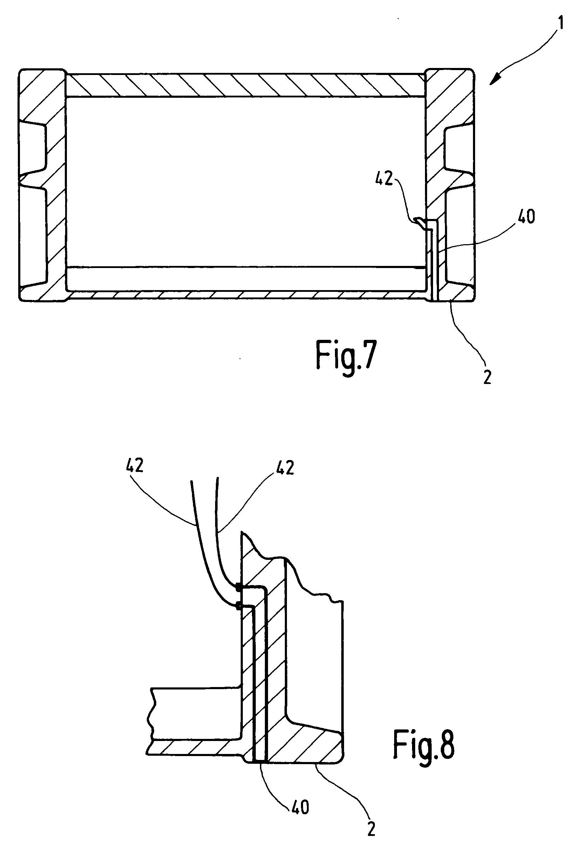

Das sechste Ausführungsbeispiel (Fig. 7 und 8) basiert auf demselben Prinzip. In das im Querschnitt dargestellte Kettenglied 1 ist ein Draht 40 eingebettet, der an einer besonders verschleißanfälligen Stelle aus der Außenfläche 2 des Kettenglieds 1 hervortritt. Der Draht 40 ist an ein in der Kette geführtes Kabel 42 angeschlossen, das zu einer Signaleinrichtung führt. Wird der Draht 40 durch Abrieb an der aus der Außenfläche 2 hervortretenden Stelle durchgescheuert, so wird die aus dem Draht 40 und dem Kabel 42 bestehende elektrische Leitung unterbrochen, was in der angeschlossenen Signaleinrichtung ein Signal auslöst und die Antriebseinrichtung der Kette abschaltet. Dieses zeigt an, dass ein für das Kettenglied 1 kritischer Abnutzungsgrad erreicht ist. Der Draht 40 muss nicht notwendig aus der Außenfläche 2 herausragen. Es kann ausreichen, dass er an einer besonders verschleißanfälligen Stelle nahe der abnutzbaren Außenfläche 2 geführt ist.

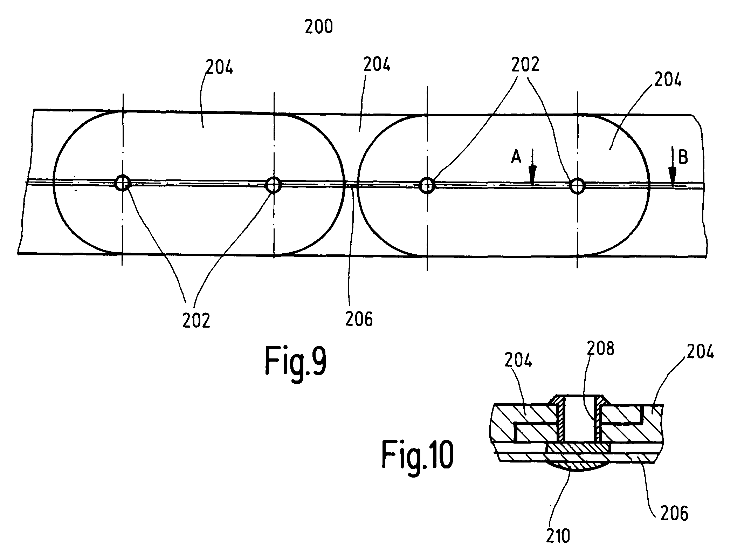

Gemäß einem siebten Ausführungsbeispiel (gemäß Fig. 9 und 10) ist entlang einer Energieführungskette 200, die mehrere, an Drehachsen 202 drehbar miteinander verbundene Kettenglieder 204 aufweist, an einer Außenwand der Kette eine elektrische Leitung 206 angebracht. Die elektrische Leitung 206 ist an den Drehachsen 202 fixiert und zwischen den Drehachsen 202 gespannt. Zur Fixierung der elektrischen Leitung 206 sind an den Drehachsen 202 Haltezapfen 208 durch die Kettenglieder 204 hindurchgeführt und drehbar verrastet. Die Haltezapfen 208 weisen an ihrem aus den Kettengliedern 204 ragenden Zapfenkopf 210 eine Ausnehmung auf, durch die die Leitung 206 hindurchgeführt und an der sie fixiert ist. Dadurch ist sichergestellt, dass sich beim Betrieb der Energieführungskette 200 der Abstand der Punkte, an denen die Leitung 206 fixiert ist und zwischen denen sie gespannt ist, nicht verändert. Lediglich bei einem Bruch eines der Kettenglieder 204 vergrößert sich der Abstand zwischen zwei aufeinanderfolgenden Befestigungspunkten der Leitung 206, so dass diese zugbeaufschlagt wird. Erreicht die Zugbeaufschlagung einen kritischen Wert, der dem Wert entspricht, bei dem die Gefahr einer Beschädigung der Kette 200 besteht, so reißt die elektrische Leitung 206. Dadurch wird ein Stromkreis unterbrochen, an den eine Antriebseinrichtung der Kette 200 angeschlossen ist. Bei Bruch der Leitung wird die Antriebseinrichtung für die Kette 200 automatisch abgeschaltet, und auf dem Maschinendisplay der Antriebseinrichtung wird eine Fehlermeldung angezeigt. Zudem sendet eine angeschlossene Signaleinrichtung ein Signal aus. Die elektrische Leitung 206 kann, wie hier gezeigt, an einer seitlichen Außenwand der Energieführungskette 200 angebracht sein. Es ist jedoch auch möglich, die Leitung 206 an einer seitlichen Innenwand der Kette 200 anzubringen. Dabei wird bevorzugt, zwei Leitungen an den einander gegenüberliegenden seitlichen Innenoder Außenwänden der Kette 200 anzubringen.

### Zusammenfassend ist folgendes festzuhalten:

Die Erfindung betrifft eine Energieführungskette mit einer Vorrichtung zur Erkennung ihres Verschleißes. Die Vorrichtung weist ein durch den Gebrauch der Kette abnutzbares Verschleißelement 13, 20, 32, 32', 40, 106 an mindestens einem Kettenglied 1 auf.

## Patentansprüche

1. Energieführungskette mit einer Vorrichtung zur Erkennung ihres Verschleißes, **dadurch gekennzeichnet, dass** die Vorrichtung zur Verschleißerkennung ein durch den Gebrauch der Kette abnutzbares Verschleißelement (13, 20, 32, 32', 40, 106) an mindestens einem Kettenglied (1) aufweist.

2. Energieführungskette nach Anspruch 1, **dadurch gekennzeichnet, dass** das Verschleißelement eine optische Markierung an einer Außenfläche des Kettenglieds ist.

3. Energieführungskette nach Anspruch 1, **dadurch gekennzeichnet, dass** das Verschleißelement eine mit der Kette geführte elektrische Leitung (40, 106) ist.

4. Energieführungskette nach Anspruch 3, **dadurch gekennzeichnet, dass** die elektrische Leitung (40) in mindestens einem Kettenglied (1) aus dessen Innerem bis nahe an seine Außenfläche (2) geführt ist.

5. Energieführungskette nach Anspruch 3 oder 4, **dadurch gekennzeichnet, dass** die elektrische Leitung (40) an mindestens einem Kettenglied (1) aus dessen Außenfläche (2) hervortritt.

6. Energieführungskette nach Anspruch 3, **dadurch gekennzeichnet, dass** sie aus Kunststoff extrudiert ist und dass die elektrische Leitung (106) in die Kette (100) eingebettet ist.

7. Energieführungskette nach einem der Ansprüche 3 bis 6, **dadurch gekennzeichnet, dass** die Vorrichtung zur Erkennung ihres Verschleißes eine Signaleinrichtung aufweist, die an die elektrische Leitung (40, 106) angeschlossen ist und die bei Unterbrechung der Leitung (40, 106) ein optisches und/oder akustisches Signal aussendet.

8. Energieführungskette nach einem der Ansprüche 3 bis 7, **dadurch gekennzeichnet, dass** eine die Kette beaufschlagende Antriebseinrichtung an die elektrische Leitung (40, 106) angeschlossen ist und bei Unterbrechung der Leitung (40, 106) abgeschaltet wird.

9. Energieführungskette nach Anspruch 1, **dadurch gekennzeichnet, dass** die Vorrichtung zur Erkennung ihres Verschleißes ein Messelement (7, 8) aufweist, das vom Verschleißelement (13) bedeckt wird und bei einer vorbestimmten Abnutzung des Verschleißelements (13) freigegeben wird.

10. Energieführungskette nach Anspruch 9, **dadurch gekennzeichnet, dass** das Messelement eine optische Markierung ist.

11. Energieführungskette nach Anspruch 9, **dadurch gekennzeichnet, dass** das Messelement (7, 8) ein entgegen einer elastischen Rückstellkraft schaltbarer elektrischer Kontakt ist, durch dessen Schalten ein Stromkreis (7, 8, 10) unterbrochen bzw. geschlossen wird, wobei die Rückstellkraft das Verschleißelement (13) beaufschlagt.

12. Energieführungskette nach Anspruch 11, **dadurch gekennzeichnet, dass** das Verschleißelement (13) eine Sollbruchstelle (14) aufweist, die durch Gebrauch der Kette so abnutzbar ist, dass sie bei einer vorbestimmten Abnutzung unter der Einwirkung der Rückstellkraft bricht.

13. Energieführungskette nach Anspruch 11 oder 12, **dadurch gekennzeichnet, dass** der elektrische Kontakt ein Federkontakt (7, 8) ist.

14. Energieführungskette nach einem der Ansprüche 11 bis 13, **dadurch gekennzeichnet, dass** zwischen dem Kontakt (7, 8) und dem Verschleißelement (13) ein Abstandshalter (12) angeordnet ist.

15. Energieführungskette nach einem der Ansprüche 11 bis 14, **dadurch gekennzeichnet, dass** die Vorrichtung zur Erkennung ihres Verschleißes eine Signaleinrichtung aufweist, die an den Stromkreis (7, 8, 10) angeschlossen ist, und die bei Unterbrechung bzw. Schließen des Stromkreises (7, 8, 10) ein akustisches und/oder optisches Signal aussendet.

16. Energieführungskette nach einem der Ansprüche 11 bis 15, **dadurch gekennzeichnet, dass** der Stromkreis (7, 8, 10) ein mit der Kette geführtes, vorzugsweise zweiadriges Kabel (10) als elektrischen Leiter aufweist.

17. Energieführungskette nach einem der Ansprüche 11 bis 15, **dadurch gekennzeichnet, dass** der Stromkreis (7, 8, 10) als elektrischen Leiter die aus metallischen Gliedern bestehende Kette aufweist.

18. Energieführungskette nach einem der Ansprüche 11 bis 17, **dadurch gekennzeichnet, dass** eine die Kette beaufschlagende Antriebseinrichtung an den Stromkreis (7, 8, 10) angeschlossen ist und bei Unterbrechung bzw. Schließen des Stromkreises (7, 8, 10) abgeschaltet wird.

19. Energieführungskette nach einem der Ansprüche 9 bis 18, **dadurch gekennzeichnet, dass** das Messelement (7, 8) unter einer Außenfläche (2) des Kettenglieds (1) angeordnet ist und das Verschleißelement (13) in die Außenfläche (2) integriert ist.

20. Energieführungskette nach einem der Ansprüche 9 bis 18, **dadurch gekennzeichnet, dass** das Messelement (7, 8) auf einer Außenfläche (2) des Kettenglieds (1) angeordnet ist.

21. Energieführungskette nach einem der Ansprüche 12 bis 19, **dadurch gekennzeichnet, dass** der Kontakt (7, 8) in eine Aufnahmekontur (5) im Kettenglied (1) eingesetzt ist, die eine Öffnung in der Außenfläche des Kettenglieds aufweist, wobei das Verschleißelement (13) eine die Öffnung verschließende Abdeckung aufweist.

22. Energieführungskette nach Anspruch 21, **dadurch gekennzeichnet, dass** die Abdeckung durch Befestigungsmittel am Kettenglied (1) gehalten wird, die die Sollbruchstelle (14) aufweisen und bei Bruch der Sollbruchstelle (14) die Abdeckung freigeben.

23. Energieführungskette nach Anspruch 21, **dadurch gekennzeichnet, dass** die Abdeckung die Sollbruchstelle (14) aufweist und bei einer vorbestimmten Abnutzung unter der Einwirkung der Rückstellkraft bricht.

24. Energieführungskette nach einem der Ansprüche 11 bis 22, **dadurch gekennzeichnet, dass** die Vorrichtung zur Erkennung ihres Verschleißes als eine einen Kontakt (7, 8), eine Feder (7), ein abnutzbares Verschleißelement (13) und Anschlüsse für einen elektrischen Leiter (10) aufweisende Baugruppe ausgebildet ist.

25. Energieführungskette nach Anspruch 1, **dadurch gekennzeichnet, dass** die Vorrichtung zur Erkennung ihres Verschleißes eine Messeinrichtung (22) in oder an einer Führung der Kette aufweist, die durch Annäherung des Verschleißelements (20) beaufschlagbar ist.

26. Energieführungskette nach Anspruch 25, **dadurch gekennzeichnet, dass** die Messeinrichtung (22) ein Näherungsschalter ist und das Verschleißelement (20) eine Beschichtung des Kettenglieds (1) ist, durch deren Annäherung der Näherungsschalter (22) geschaltet wird.

27. Energieführungskette nach Anspruch 1, **dadurch gekennzeichnet, dass** die Vorrichtung zur Erkennung ihres Verschleißes eine Messeinrichtung (34) in oder an einer Führung der Kette und einen Magneten (30, 30') an mindestens einem Kettenglied aufweist, welcher vom Verschleißelement (32, 32') bedeckt wird und bei einer vorbestimmten Abnutzung des Verschleißelements (32, 32') freigegeben wird, und durch dessen Annäherung die Messeinrichtung (34) beaufschlagbar ist.

28. Energieführungskette nach Anspruch 27, **dadurch gekennzeichnet, dass** der Magnet (30) an einer Außenfläche (2) des Kettenglieds (1) angebracht ist und dass das Verschleißelement eine den Magneten (30) bedeckende Beschichtung (32) ist.

29. Energieführungskette nach Anspruch 27, **dadurch gekennzeichnet, dass** der Magnet (30') in einer Ausnehmung (37) im Kettenglied (1) angebracht ist und vom Verschleißelement (32') im Abstand zu einer Außenfläche (2) des Kettenglieds (1) gehalten wird.

30. Energieführungskette mit einer Vorrichtung zur Erkennung eines Kettenbruchs, **dadurch gekennzeichnet, dass** die Vorrichtung zur Erkennung eines Kettenbruchs ein Bruchelement (206) aufweist, das an mindestens einem Kettenglied (204) an zwei Befestigungspunkten an einer Seitenwand fixiert und zwischen diesen Punkten gespannt ist.

31. Energieführungskette nach Anspruch 30 , **dadurch gekennzeichnet, dass** das Bruchelement (206) eine elektrische Leitung ist.

32. Energieführungskette nach Anspruch 30 oder 31, **dadurch gekennzeichnet, dass** sich die Befestigungspunkte an das Kettenglied (204) mit benachbarten Kettengliedern verbindenden Drehachsen (202) befinden.

33. Energieführungskette nach Anspruch 32, **dadurch gekennzeichnet, dass** das Bruchelement (206) an Haltezapfen (208) fixiert ist, die an den Drehachsen befestigt sind.

34. Energieführungskette nach einem der Ansprüche 30 bis 33, **dadurch gekennzeichnet, dass** das Bruchelement (206) entlang einer seitlichen Außenwand oder einer seitlichen Innenwand der Energieführungskette gespannt ist.

35. Energieführungskette nach Anspruch 34, **dadurch gekennzeichnet, dass** ein weiteres Bruchelement entlang einer zweiten seitlichen Außenwand oder einer zweiten seitlichen Innenwand gespannt ist.

36. Energieführungskette nach einem der Ansprüche 31 bis 35, **dadurch gekennzeichnet, dass** an das Bruchelement (206) eine Anzeigeeinheit angeschlossen ist, die bei Unterbrechung des Bruchelements (206) ein optisches und/oder akustisches Signal aussendet.

37. Energieführungskette nach einem der Ansprüche 31 bis 36, **dadurch gekennzeichnet, dass** eine die Energieführungskette (200) beaufschlagende Antriebseinrichtung an das Bruchelement (206) angeschlossen ist und bei Unterbrechung des Bruchelements (206) abgeschaltet wird.
